# EUROPEAN PATENT APPLICATION

(11) **EP 3 957 617 A1**
(43) Date of publication of application: **23.02.2022**
(21) Application number: 20382761.3
(22) Date of filing: 21.08.2020
(51) Int. Cl.: C04B 28/26

(54) **ADDITIVE COMPOSITION FOR USE IN THE MANUFACTURE OF PAVEMENTS, PAVING METHOD AND ITS USE**

(71) Applicant: INICIATIVAS BATISOLID, S.L., 35450 Santa María de Guía (ES)
(72) Inventor: LORENZO CALVO, Javier, 35450 SANTA MARÍA DE GUÍA (ES)
(74) Representative: Clarke Modet & Co.

(57) **Abstract**

The present invention provides an additive composition for use in the manufacture of pavements, paving method and its use. The additive composition for use in the manufacture of pavements according to the invention comprising: 0.3-0.5 wt.% of sodium silicate, 2-4 wt.% of aluminium sulphate, 13-18 wt.% of calcium carbonate, 7-9 wt.% of at least one additive, 5-7 wt.% of hydroxypropyl methyl cellulose, 2-4 wt.% of sodium gluconate, 58-63 wt.% of at least one hydraulic binder, 5-7 wt.% of at least one natural pigment and 5-7 wt.% of cane-based vegetable fibers. The additive composition achieves an improvement in time and efficiency in the construction of pavements, obtaining supports with higher density and resistance to deterioration. Besides, it contributes to a greater economic and environmental sustainability.

## Description

### FIELD OF THE INVENTION

The present invention is encompassed within the technical field of construction industry and civil works, specifically in the area of paving and construction of pavements.

### BACKGROUND ART

The compositions commonly used for the stabilization of pavements comprising polymers and / or silicate derivatives or silica. If polymers are used, they are only added to selected soils. Therefore, polymers are not used in any type of soil. Polymer-based flooring is very rigid. If, for example, we want to apply this pavement to an agricultural road in which the different compacted subbase layers have not been made, this road necessarily tends to crack and split very easily.

Regarding silicate derivatives or silica, these serve to act against soil fats and enhance the effect of cement. However, these additives do not make the substrate flexible, so if, for example, a lot of basalt stone clinker have been obtained during milling, the reaction with the cement will cause many micro-cracks.

In both cases, these additives must be added to the soil, then they must be mixed with a hydraulic binder, cement or lime. Furthermore, the soil must have very high humidity, so that the soil, under this condition, is unworkable by heavy machinery and low yields are obtained, which triggers a greater effort on the part of workers

On the other hand, in both cases, the fines and clays are not able to set with the hydraulic binders, which is why there is a product that has a lower durability, more expensive, and a low load resistance.

In view of all these disadvantages, there are some patents that have tried to solve the existing problems. US9908814B1 relates to cementitious compositions, concrete compositions, and methods of making and using the cementitious compositions in the preparation of concrete. The cementitious composition comprising between 40 wt. % and 55 wt. % of fly ash and/or slag cement, between 0.05 wt. % and 0.5 wt. % of a saccharide, between 25 wt. % and 50 wt. % of metakaolin and/or pumice and between 0.01 wt. % and 20 wt. % of silica fume. The compositions have improved properties: increased flexural and compressive strength, improved wear, reduced permeability, and reduced slumping.

CN105801024A provides recycled aggregate concrete and a preparation method thereof. The recycled aggregate concrete is prepared from the following raw materials in parts by mass: 220-260 parts of cement, 60-80 parts of fly ash, 60-80 parts of mineral powder, 60-80 parts of stone, 850-1,100 parts of recycled aggregate, 140-180 parts of yellow sand, 620-660 parts of beneficiation powder, 5-8 parts of additives and 160-180 parts of water, wherein the additives consist of sodium abietate, polyacrylamide, polyacrylic acid, sodium gluconate, carboxymethylcellulose, allyl polyoxyethylene ether, sodium dodecyl sulphate, calcium lignosulphonate, triisopropanolamine and water. In the invention, the construction waste is made into recycled aggregate to replace natural aggregate, and the consumption of natural aggregate in the construction industry can be reduced to lower the cost.

CN107601996A relates to a composition that comprises the following components by weight percent: 15%-16% of cement, 13%-14% of silica fume, 49%-50% of coal ash, 15%-16% of a naphthalene water reducer, 3%-4% of sodium gluconate, 1%-2% of hydroxypropyl methyl cellulose ether and 2%-3% of dispersible latex powder. The desired technical effect is to improve the mechanical strength of a permeable pavement when there is the problem of excess moisture.

However, the compositions described in the state of the art lack of flexibilizing additives, pigments that attempts to mimic the pavement with the environment, vitrifiers, vegetable fibers, etc. Therefore, said compositions do not achieve the performance of the present invention, nor the physical and mechanical properties, as well as its high degree of respect for the environment.

The present invention solves the technical problems present in the state of the art and mentioned above.

### SUMMARY OF INVENTION

In view of the problems of the state of the art, an additive composition for pavements that met the following requirements is desirable:
- Retain moisture, in order to avoid dehydration and to reduce the amount of water to use, to improve workability;
- expand the water so that the humidity is similar throughout the thickness of the pavement to be treated;
- improve the behaviour against wear and tear;
- improve flexibility and prevent cracking, as well as reducing expansion joints;
- a single product, easy to use and suitable for any type of soil;
- yields in m² that allow competing with the prices of concrete and asphalt.

Therefore, the main object of the present invention is to provide an alternative to classic formulations, using almost any type of soil as inert and the additive composition of the present invention as binder. This composition is suitable for use in the manufacture of pavements. It can be widely used in park roads, fire lanes, parking lots, etc.

The stabilized and consolidated pavements of the present invention have technical, economic and ecological advantages that make them the optimal solution in many situations. It is an alternative that contributes to greater economic and environmental sustainability, given its high durability and reduced maintenance, which allows a more efficient use of resources.

The additive composition of the present invention achieves an improvement in time and efficiency in the construction of pavements, obtaining a support with higher density and greater resistance to deterioration.

Therefore, the problem to be solved by the present invention is to achieve a pavement that can be built in a short time with a high efficiency and with ecological and environmental advantages.

As used herein, the term *"pavement(s)"* has the meaning commonly attributed in the state of the art, this is, the horizontal base of a certain construction that supports people, animals, vehicles, etc. The term *"pavement"* refers to all type of roads or streets, but it can also mean any paved surface, like a sidewalk or paved area in a park.

In a first aspect, the present invention refers to an additive composition for use in the manufacture of pavements comprising:
between 0.3 and 0.5% by weight of sodium silicate;
between 2 and 4% by weight of aluminium sulphate;
between 13 and 18% by weight of calcium carbonate;
between 7 and 9% by weight of at least one additive selected from the group consisting of sodium hexametaphosphate, water-soluble lignin derivatives and/or mixtures thereof;
between 5 and 7% by weight of hydroxypropyl methyl cellulose;
between 2 and 4% by weight of sodium gluconate;
between 58 and 63% by weight of at least one hydraulic binder selected from the group consisting of natural hydraulic lime NHL5, white cement of grade 42,5, white cement of grade 52,5 and/or mixtures thereof;
between 5 and 7% by weight of at least one natural pigment; and
between 5 and 7% by weight of cane-based vegetable fibers.

These percentages by weight are calculated on the total of the additive composition. By optimizing the proportion and adding reasonable additives, the shortcomings of difficulty in slump control and low strength are overcome.

In the additive composition of the present invention, the sodium silicates act as vitrifier. This additive reacts allowing to obtain a crystallized surface resistant to runoff, adverse weather conditions and has a greater resistance to wear caused by vehicles. Also, the specific proportion (0.3 and 0.5% by weight) of this compound allows to avoid the abrasion of the tires with the pavement and there is no slippage even if the pavement is wet.

The sodium hexametaphosphate reduces the free lime that may remain after obtaining the clinker and improves the entire setting process. An excess of free lime is negative for the pozzolanic processes of the cement.

The water-soluble lignin derivatives act as water retainers that allows to use a smaller amount of water than necessary (up to 40% less). If a greater proportion is added than that described in the present invention (between 7 and 9% by weight), the soil becomes unworkable due to excess softness, and if it is added in a smaller proportion, it hardly fulfils its function.

The hydroxypropyl methyl cellulose is incorporated into the formulation of the additive composition of the present invention to retain water and to prevent microcracks.

The sodium gluconate is a retardant and is used to achieve a higher yield in m² per day.

The natural pigments used are usually brown or reddish. However, any natural pigment can be used. The objective is to create a harmony with the landscape.

The natural hydraulic lime NHL5 is a mixture of hydrated and aerial lime. This compound allows to inhibit clays and obtain a progressive and slow hardening. Thanks to this, when there are breaks or detachment, the pavement hardens quickly.

Furthermore, white cement of grade 42,5 and white cement of grade 52,5 are used for ecological reasons.

In a second aspect, the present invention refers that the additive composition further comprises sodium lauryl sulphate as a surfactant. This compound avoids the molecular tension, allowing the different additives to adhere better.

The additive composition of the present invention is a single-component preparation. This allows a single application, avoiding breaks in chemical reactions when they are additives that are added and mixed, and then add another and mix it again, breaking the forged ones made with different humidities.

In a third aspect, the present invention refers to the additive is in powder format, which guarantees an adequate and precise dosage on the surface and in depth. If the format is liquid, it is very difficult to dose efficiently, both in its surface homogeneously and in thickness, since the liquid could leak and reach the resources hydric.

In a fourth aspect, the present invention refers to a pavement characterized in that it comprises between 86 and 93% of soil and between 7 and 14% of the additive composition of the present invention.

In a fifth aspect, the present invention refers to a paving method comprising the following steps:
i) milling a soil until the stones present in said soil have a size of less than 15 cm;
ii) adding water to the soil;
iii) adding the additive composition of the present invention;
iv) mixing the soil and the additive composition to obtain a pavement;
v) compacting the pavement with an iron roller;
vi) regularizing the pavement with a pneumatic roller;
vii) covering the pavement with geotextile and soaking between 3 and 6 days.

In a final aspect, the present invention refers to the use of the additive composition of the present invention for the manufacture of pavements.

In summary, the advantages of the present invention are as follows:
- Single component. Improves the execution time and the quality of the final pavement.
- Reduction of water use by more than 40% in the work process.
- Tensile strength of 10mgpa.
- Ecological.
- High yields of around 1,500 m²/day compared to the 300m²/day found in current solutions.

### DESCRIPTION OF EMBODIMENTS

In all examples, the paving method using the additive composition of the present invention was carried out. The pavement of all examples comprises 87% of soil and 13% of the additive composition. Furthermore, the additive composition in all examples is the same and the values of the different components are:
- between 0.3 and 0.5% by weight of sodium silicate;
- between 2 and 4% by weight of aluminium sulphate;
- between 13 and 18% by weight of calcium carbonate;
- between 7 and 9% by weight of at least one additive selected from the group consisting of sodium hexametaphosphate, water-soluble lignin derivatives and/or mixtures thereof;
- between 5 and 7% by weight of hydroxypropyl methyl cellulose;
- between 2 and 4% by weight of sodium gluconate;
- between 58 and 63% by weight of at least one hydraulic binder selected from the group consisting of natural hydraulic lime NHL5, white cement of grade 42,5, white cement of grade 52,5 and/or mixtures thereof;
- between 5 and 7% by weight of at least one natural pigment; and
- between 5 and 7% by weight of cane-based vegetable fibers.

### Example 1- Paving method on an agricultural road using the additive composition of the present invention.

The example 1 was carried out on an agricultural road with a high traffic load: tractors, trucks and medium-load vehicles. The road has various types of soil, with a concentration of clays over 30% and, in some sections, rough stones with a high pozzolan content. In addition, the weather conditions in the area are rainy several months a year. Furthermore, the slope of the road has around 6-7% and the road ended in union with a pre-existing concrete road.

Initially the soil was milled, and water was applied to the soil. Subsequently, the additive composition of the present invention was added, mixing it with the soil.

Subsequently, the pavement obtained was regularized and covered with a geotextile of 200gr, and it was continuously wetted for 5 days. A high performance (up to 600 m²/day) and efficiency was achieved.

The compressive strength of test specimens of pavement of example 1 was analyzed according to European Standard UNE-EN 12504-1:2009 *"Testing concrete in structures - Part 1: Cored specimens* - *Taking, examining and testing in compression".* The compressive strength of the test specimen of the example was 10MPa at 58 days.

After 20 months, no cracking or wear was observed in any section of the entire pavement. No wear was observed in the tread layer of the pavement, so no disaggregation of fines was observed in the pavement.

The presence of dust was minimal, and this minimum amount is derived from the materials that vehicles drag on their wheels.

The union with the pre-existing concrete section was found in perfect condition, and on the contrary, it was appreciated that the pre-existing concrete road had cracks and wear.

### Example 2- Paving method on a forest road using the additive composition of the present invention.

The example 2 was carried out on a forest road of a landscape reserve, with a traffic of all types of vehicles, including fire fighting vehicles with tanks. The road has various types of soil, with a high concentration of tuff, clays, gravel dump and some small section with concrete In addition, the forest road is located in an area at high altitude (approx. 2000 m), so the weather conditions in the area are very aggressive, with temperatures below 0°C, which leads to the appearance of ice and sometimes freezing of the surface of the road. Furthermore, the road has some section of steep slopes greater than 15%.

Initially the soil was milled, and water was applied to the soil. Subsequently, the additive composition of the present invention was added, mixing it with the soil.

Subsequently, the pavement obtained was regularized and covered with a geotextile of 200gr, and it was continuously wetted for 5 days. A high performance (up to 950 m²/day) and efficiency was achieved.

The compressive strength of test specimens of pavement of example 2 was analysed according to European Standard UNE-EN 12504-1:2009 *"Testing concrete in structures - Part 1: Cored specimens* - *Taking, examining and testing in compression".* The compressive strength of the test specimen of the example was 200MPa at 58 days and the breakage of the specimen 7 MPa at 28 days and 10 MPa at 58 days.

After 3 years, no cracking or wear was observed in any section of the entire pavement.

### Example 3- Paving method on a road for recreational use using the additive composition of the present invention.

The example 3 was carried out on a road for recreational use (walks, races and bicycles). The road further comprises a section with vehicle circulation and another section is used as parking. This road is in a ravine, at an average elevation of 600m above sea level. The road is made of volcanic and basaltic stones.

The place is a reserve of water resources, so any action must pass the controls of the competent authority. Thanks to the ecological characteristics of the additive composition of the present invention, this example could be carried out.

Initially the soil was milled, and water was applied to the soil. Subsequently, the additive composition of the present invention was added, mixing it with the soil. Subsequently, the pavement obtained was regularized and covered with a geotextile of 200gr, and it was continuously wetted for 6 days. A high performance (up to 450 m²/day) and efficiency was achieved.

The compressive strength of test specimens of pavement of example 2 was analysed according to European Standard UNE-EN 12504-1:2009 *"Testing concrete in structures - Part 1: Cored specimens* - *Taking, examining and testing in compression".* The compressive strength of the test specimen of the example was 180MPa at 58 days and the breakage of the specimen 7,5 MPa.

After 3 years, no cracking or wear was observed in any section (recreational, circulation and parking) of the entire pavement. Despite the high presence of stone clinker, cracks and microcracks are not visible after three years.

### Example 4 - Paving method on a road to farmhouses using the additive composition of the present invention.

The example 4 was carried out on an access road to farmhouses among a forest.

Furthermore, the road has some section of steep slopes greater than 15%. The road has various types of uncrushed aggregates, granular soils, or a mixture of both with a low presence of organic matter, leaves, roots, etc. This organic matter and roots were removed from the surface.

Initially the soil was milled, and water was applied to the soil. Subsequently, the additive composition of the present invention was added, mixing it with the soil. Subsequently, the pavement obtained was regularized and covered with a geotextile of 200gr, and it was continuously wetted for 3 days. A high performance (up to 900 m²/day) and efficiency was achieved.

The compressive strength of test specimens of pavement of example 4 was analysed according to European Standard UNE-EN 12504-1:2009 *"Testing concrete in structures - Part 1: Cored specimens* - *Taking, examining and testing in compression".* The compressive strength of the test specimen of the example was 18MPa at 58 days and the breakage of the specimen 9.3 MPa.

After 3 years, no cracking or wear was observed in any section of the entire pavement, despite inclement weather and the impact of vehicle treads.

The above description is only a preferred embodiment of the present invention, and the scope of protection of the present invention is not limited to the above embodiments, and all the technical solutions under the idea of the present invention belong to the protection scope of the present invention. It should be noted that those skilled in the art should be considered as the protection scope of the present invention without departing from the spirit and scope of the present invention.

## Claims

1. An additive composition for use in the manufacture of pavements comprising:
between 0.3 and 0.5% by weight of sodium silicate;
between 2 and 4% by weight of aluminium sulphate;
between 13 and 18% by weight of calcium carbonate;
between 7 and 9% by weight of at least one additive selected from the group consisting of sodium hexametaphosphate, water-soluble lignin derivatives and/or mixtures thereof;
between 5 and 7% by weight of hydroxypropyl methyl cellulose;
between 2 and 4% by weight of sodium gluconate;
between 58 and 63% by weight of at least one hydraulic binder selected from the group consisting of natural hydraulic lime NHL5, white cement of grade 42,5, white cement of grade 52,5 and/or mixtures thereof;
between 5 and 7% by weight of at least one natural pigment; and
between 5 and 7% by weight of cane-based vegetable fibers.

2. The additive composition according to claim 1, wherein the additive composition further comprises sodium lauryl sulphate as a surfactant.

3. The additive composition according to claim 1 or 2, wherein the additive is in powder format.

4. Pavement **characterized in that** it comprises between 86 and 93% of soil and between 7 and 14% of the additive composition according to claim 1 or 2.

5. Paving method comprising the following steps:
i) milling a soil until the stones present in said soil have a size of less than 15 cm;
ii) adding water to the soil;
iii) adding the additive composition according to claim 1 or 2;
iv) mixing the soil and the additive composition to obtain a pavement;
v) compacting the pavement with an iron roller;
vi) regularizing the pavement with a pneumatic roller;
vii) covering the pavement with geotextile and soaking between 3 and 6 days.

6. Use of the additive composition according to claim 1 or 2, for the manufacture of pavements.
